Europäisches Patentamt

European Patent Office

Office européen des brevets

(19)

(11) Veröffentlichungsnummer : **0 152 028**
**B1**

(12) **EUROPÄISCHE PATENTSCHRIFT**

(45) Veröffentlichungstag der Patentschrift :
26.04.89

(21) Anmeldenummer : 85101053.8

(22) Anmeldetag : 01.02.85

(51) Int. Cl.⁴ : **C 08 L 67/06, C 08 K 5/19**

(54) **Härtbare Polyesterformmassen.**

(30) Priorität : **10.02.84 DE 3404670**

(43) Veröffentlichungstag der Anmeldung :
**21.08.85 Patentblatt 85/34**

(45) Bekanntmachung des Hinweises auf die Patenter-
teilung : **26.04.89 Patentblatt 89/17**

(84) Benannte Vertragsstaaten :
**DE FR GB IT NL**

(56) Entgegenhaltungen :
**DD–A– 127 214**
**DE–B– 1 953 637**
**FR–A– 2 292 013**
**FR–A– 2 334 716**
**INTERNATIONAL POLYMER SCIENCE AND TECHNO-**
**LOGY, Band 7, Nr. 4, 1980, Seiten 15-18, Shawbury,**
**Shrewsbury, ·GB; T. YAMADA "Mould release**
**agents"**

(73) Patentinhaber : **BASF Aktiengesellschaft**
**Carl-Bosch-Strasse 38**
**D-6700 Ludwigshafen (DE)**

(72) Erfinder : **Volkert, Otto, Dr.**
**Im Eiertal 10**
**D-6719 Weisenheim (DE)**
Erfinder : **Georg, Gerhard**
**Dietlindstrasse 44**
**D-6700 Ludwigshafen (DE)**

**Beschreibung**

Die Erfindung betrifft eindickfähige ungesättigte Polyesterformmassen, die nach dem Aushärten in Metallpressen eine verbesserte Entformbarkeit aufweisen.

Eingedickte faser- und füllstoffhaltige ungesättigte Polyesterformmassen, sogenannte SMC- oder BMC-Formmassen, werden gewöhnlich in Metallformen unter Druck ausgehärtet. Damit das entstehende Fertigteil sich leicht aus der Form entnehmen läßt, setzt man den Polyesterformmassen Trenn- oder Entformungshilfsmittel zu. Üblich sind hier Metallsalze von langkettigen Carbonsäuren, beispielsweise Zinkstearat. Dieses hat jedoch den Nachteil, daß es als Feststoff nur schwer in der Harzmischung homogen verteilt werden kann ; außerdem müssen verhältnismäßig große Mengen eingesetzt werden, um eine befriedigende Trennwirkung zu erzielen.

Der Erfindung lag daher die Aufgabe zugrunde, ein verbessertes Trennmittel für Polyesterformmassen zu entwickeln.

Es wurde gefunden, daß diese Aufgabe gelöst wird, wenn als Trennmittel spezielle Ammoniumsalze verwendet werden.

Gegenstand der Erfindung sind härtbare ungesättigte Polyesterformmassen enthaltend ein Gemisch aus

A. einem ethylenisch ungesättigten Polyester oder einem endständig ungesättigten Vinylesterharz, gegebenenfalls

B. bis zu 80 Gew.-%, bezogen auf A + B, eines ethylenisch ungesättigten, mit A copolymerisierbaren Monomeren,

C. 5 bis 400 Gew.-%, bezogen auf A + B, faserförmiger Verstärkungsmittel und/oder anorganische Füllstoffe,

D. 0,1 bis 3 Gew.-%, bezogen auf A + B, organischen Peroxiden,

E. 0,2 bis 5 Gew.-%, bezogen auf A + B, eines Eindickmittels,

F. 0,1 bis 5 Gew.-%, bezogen auf A + B, eines Trennmittels, sowie gegebenenfalls

G. üblichen schrumpfmindernden oder elastifizierenden organischen Polymeren, Inhibitoren, Pigmente und Härtungsbeschleuniger,
wobei als Trennmittel Ammoniumsalze gemäß Anspruch verwendet werden.

Die anspruchsgemäßen Polyesterformmassen enthalten folgende Bestandteile :

A. Als ethylenisch ungesättigte Polyester eignen sich die üblichen Polykondensationsprodukte aus mehrwertigen, insbesondere zweiwertigen Carbonsäuren und deren veresterbaren Derivaten, insbesondere Anhydriden, die mit mehrwertigen, insbesondere zweiwertigen Alkoholen esterartig verknüpft sind, und gegebenenfalls zusätzlich Reste einwertiger Carbonsäuren und/oder Reste einwertiger Alkohole und/oder Reste von Hydroxycarbonsäuren enthalten, wobei zumindest ein Teil der Reste über ethylenisch ungesättigte copolymerisierbare Gruppen verfügen muß.

Als mehrwertige, insbesondere zweiwertige, gegebenenfalls ungesättigte Alkohole eignen sich die üblichen, insbesondere acyclischen Gruppen, cyclische Gruppen als auch beide Arten von Gruppen aufweisenden Alkandiole und Oxalkandiole, wie z. B. Ethylenglykol, Propylenglykol-1,2, Propandiol-1,3, Butylenglykol-1,3, Butandiol-1,4, Hexandiol-1,6, 2,2-Dimethylpropandiol-1,3, Diethylenglykol, Triethylenglykol, Polyethylenglykol, Dipropylenglykol, Cyclohexandiol-1,2, 2,2-Bis-(hydroxy-cyclohexyl)-propan, Trimethylolpropanmonoallylether oder Butandiol-1,4. Ferner können ein-, drei- oder höherwertige Alkohole, wie z. B. Ethylhexanol, Fettalkohole, Benzylalkohole, 1,2-Di-(allyloxy)-propanol-(3), Glycerin, Pentaerythrit oder Trimethylolpropan in untergeordneten Mengen mitverwendet werden.

Die mehrwertigen, insbesondere zweiwertigen Alkohole werden im allgemeinen in stöchiometrischen oder annähernd stöchiometrischen Mengen mit mehrbasischen, insbesondere zweibasischen Carbonsäuren bzw. deren kondensierbaren Derivaten umgesetzt.

Geeignete Carbonsäure bzw. deren Derivate sind zweibasische olefinisch ungesättigte, vorzugsweise α, β-olefinisch ungesättigte Carbonsäuren, wie z. B. Maleinsäure, Fumarsäure, Chlormaleinsäure, Itaconsäure, Methylenglutarsäure und Mesaconsäure bzw. deren Ester oder vorzugsweise deren Anhydride. In die Polyester können weiterhin zusätzlich andere modifizierend wirkende zweibasische, ungesättigte und/oder gesättigte, sowie aromatische Carbonsäuren, wie z. B. Bernsteinsäure, Glutarsäure, Methylglutarsäure, Adipinsäure, Sebacinsäure, Pimelinsäure, Phthalsäureanhydrid, o-Phthalsäure, Isophthalsäure, Terephthalsäure, Dihydrophthalsäure, Tetrahydrophthalsäure, Tetrachlorphthalsäure, 3,6-Endomethylen-1,2,3,6-tetrahydrophthalsäure, Tetrachlorphthalsäure oder Hexachlorendomethylentetrahydrophthalsäure einkondensiert sein, ferner ein-, drei- und höherbasische Carbonsäuren, wie z. B. Ethylhexansäure, Fettsäuren, Methacrylsäure, Acrylsäure, Fettsäuren, 1,2,4,5-Benzoltetracarbonsäure.

Vorzugsweise verwendet werden Maleinsäure bzw. deren Anhydrid und Fumarsäure.

Auch ungesättigte Polyester, die unter Verwendung von Dicyclopentadien hergestellt wurden, lassen sich vorteilhaft einsetzen.

Gemischte ungesättigte Polyester, darunter auch solche, die in den Vinylmonomeren B nur beschränkt löslich sind und leicht kristallisieren, können ebenfalls vorteilhaft eingesetzt werden. Solche leicht kristallisierende ungesättigte Polyester können z. B. aus Fumarsäure, Adipinsäure, Terephthalsäure, Ethylenglykol, Butandiol-1,4, Hexandiol-1,6 und Neopentylglykol aufgebaut sein.

Die ungesättigten Polyester besitzen im allgemeinen Säurezahlen von 5 bis 200, vorzugsweise von 20 bis 85 und mittlere Molekulargewichte von ungefähr 800 bis 6 000, vorzugsweise von etwa 1 000 bis 4 000.

Die amorphen und gegebenenfalls kristallisierbaren ungesättigten Polyester werden im allgemeinen durch Schmelzkondensation oder Kondensation unter azeotropen Bedingungen aus ihren Ausgangskomponenten nach kontinuierlichen oder diskontinuierlichen Verfahren hergestellt.

Geeignete endständig ungesättigte Vinylesterharze im Sinne der Erfindung besitzen die charakteristische Gruppierung —CO—OCH$_2$CHOH—CH$_2$O— und enthalten endständige polymerisierbare ungesättigte Gruppen. Die Vinylesterharze werden hergestellt durch Umsetzung von etwa stöchiometrischen Mengen eines Polyepoxidharzes und einer ungesättigten Monocarbonsäure, beispielsweise Methacrylsäure.

Vinylesterharze der genannten Art werden z. B. beschrieben in der US-PS-3 367 992, wonach Dicarbonsäure-Halbester von Hydroxyacrylaten oder -methacrylaten mit Polyepoxidharzen umgesetzt werden. Gemäß US-PS-3 066 112 und 3 179 623 werden Vinylesterharze aus Monocarbonsäuren, z. B. Acryl- und Methacrylsäure, erhalten ; hier wird auch eine alternative Herstellungsmethode genannt, wonach ein Glycidylmethacrylat oder -acrylat mit dem Natriumsalz eines zweiwertigen Phenols, z. B. Bisphenol A, zur Reaktion gebracht wird. Vinylesterharze auf Basis von Epoxi-Novolac-Harzen sind in der US-PS-3 301 743 beschrieben. In der US-PS-3 256 226 werden Vinylesterharze offenbart, bei denen das Molekulargewicht des Polyepoxids vor der Reaktion mit der Acrylsäure durch Umsetzung von 2 Mol Polyepoxid mit 1 Mol einer Dicarbonsäure gesteigert wird. In Betracht kommen ferner modifizierte Vinylesterharze, beispielsweise solche gemäß DE-OS-25 34 039 (äquivalent zu US-PS-3 947 422) die Halbestergruppen enthalten und durch Reaktion der zweiten Hydroxylgruppe der Gruppierung —CO—OCH$_2$.CHOH—CH$_2$O— mit einem Dicarbonsäureanhydrid, z. B. dem Anhydrid der Maleinsäure, Citraconsäure, Phthalsäure, Tetrabromphthalsäure u. a. erhalten werden.

Die erfindungsgemäßen härtbaren Polyesterformmassen enthalten im allgemeinen 20 bis 90, vorzugsweise 30 bis 80 Gew.- % an Komponente A, bezogen auf das Gesamtgewicht der Komponenten A + B.

B. Als copolymerisierbare, ethylenisch ungesättigte monomere Verbindungen kommen die üblicherweise zum Herstellen ungesättigter Polyesterformmassen verwendeten Allyl- und vorzugsweise Vinylverbindung in Frage, Vinylaromaten, wie Styrol, substituierte Styrole, wie p-Chlorstyrol oder Vinyltoluol, Ester der Acrylsäure und Methacrylsäure mit 1 bis 18 Kohlenstoffatomen enthaltenden Alkoholen, wie Methacrylsäuremethylester, Acrylsäurebutylester, Ethylhexylacrylat, Hydroxypropylacrylat, Dihydrodicyclopentadienylacrylat, Butandioldiacrylat und (Meth)-acrylsäureamide, Allylester, wie Diallylphthalat, und Vinylester wie Ethylhexansäurevinylester, Vinylacetat, Vinylpropionat, Vinylpivalat und andere. Desgleichen eignen sich Gemische der genannten olefinisch ungesättigten Monomeren. Bevorzugt geeignet als Komponente B sind Styrol, p-Methylstyrol, Chlorstyrol, Vinyltoluol, Divinylbenzol und Diallylphthalat. Die Komponente B ist in den Polyesterformmassen in einer Menge von bis zu 80, vorzugsweise von 1 bis 70 Gew.- %, bezogen auf das Gesamtgewicht der Komponenten A + B enthalten.

C. Als Verstärkungsfasern kommen in Frage anorganische oder organische Fasern als Rovings oder flächige, gegebenenfalls daraus gewebte Gebilde, wie Matten, z. B. aus Glas, Kohlenstoff, Asbest, Cellulose und synthetischen organischen Fasern, wie Polycarbonsäureester, Polycarbonate und Polyamide.

Geeignete Füllstoffe sind z. B. übliche feinpulvrige oder körnige anorganische Füllstoffe, wie Kreide, Kaolin, Quarzmehl, Dolomit, Schwerspat, Metallpulver, Aluminiumoxihydrat, Zement, Talkum, Kieselgur, Holzmehl, Holzspäne, Pigmente und dergleichen.

Verstärkungsfasern und Füllstoffe werden in Mengen von 5 bis 400, vorzugsweise 10 bis 250 Gew.- %, bezogen auf die Komponenten A + B, verwendet.

D. Als Polymerisationsinitiatoren werden übliche, in der Wärme Radikale bildende organische Peroxide in Mengen von 0,1 bis 3 Gew.- %, bezogen auf A + B, eingesetzt. Geeignet Initiatoren sind z. B. : Benzoylperoxid, tert.-Butylperoctoat, tert.-Butylperbenzoat, Dicumylperoxid, Di-tert.-Dibutyl-peroxid und Perketale, wie z. B. Trimethylcyclohexanonperketal, sowie Percarbonate. Hydroperoxide sind nicht geeignet. Vorzugsweise sollen die Peroxide eine Halbwertszeit bei 80 °C von mehr als 5 h, insbesondere von mehr als 50 h haben. Reaktive Peroxide, z. B. tert.-Butylperoctoat können zusätzlich in untergeordneten Mengen anwesend sein. Auch CC-labile Verbindungen sowie Azoverbindungen sind geeignet.

E. Geeignete Eindickmittel sind beispielsweise Erdalkalioxide oder -hydroxide, wie Calciumoxid, Calciumhydroxid, Magnesiumhydroxid und vorzugsweise Magnesiumoxid, sowie Gemische dieser Oxide bzw. Hydroxide. Diese können auch ganz oder teilweise durch Zinkoxid ersetzt sein. Die Verdickungsmittel werden den Formmassen in Mengen von 0,2 bis 5, vorzugsweise von 0,5 bis 3 Gew.- %, bezogen auf A + B zugesetzt.

F. Die härtbaren Formmassen enthalten erfindungsgemäß 0,1 bis 5, vorzugsweise 0,3 bis 3 Gew.- %, bezogen auf A + B, eines Ammoniumsalzes aus aliphatischen Carbonsäuren, insbesondere Ölsäure, und aliphatischen Aminen, ausgewählt aus primären Aminen und Amid- und/oder Estergruppen enthaltenden primären, sekundären oder tertiären Aminen, als Trennmittel eingesetzt, wobei das Salz insgesamt mindestens 25 aliphatische C-Atome aufweist. Hierbei wird zwar bevorzugt ein stöchiometrisch zusammengesetztes Gemisch von Säure und Amin verwendet, Abweichungen vom stöchiometrischen Verhältnis von Carboxyl- zu Aminogruppen können jedoch auch in Kauf genommen werden, wobei allerdings der gegebenenfalls vorhandene Überschuß von Carboxyl- oder Aminogruppen 50 Mol. % nicht überschreiten sollte.

Bevorzugt werden solche Trennmittel, die bei Raumtemperatur flüssig sind und/oder sich in einer oder mehreren Komponenten der Polyesterformmasse auflösen lassen.

Zusätzlich zu den erfindungsgemäßen Trennmitteln können in manchen Fällen vorteilhaft noch übliche Trennmittel, beispielsweise Zinkstearat, eingesetzt werden. Dies ist besonders bei Vinylesterharzen von Bedeutung, bei denen eine Kombination von 2 bis 5 Gew.-Teilen der erfindungsgemäßen Trennmittel mit 2 bis 8 Gew.-Teilen Zinkstearat, jeweils bezogen auf 100 Gew.-Teile A + B, besonders günstig ist.

G. Als weitere übliche Zusatzstoffe kommen in Frage :

Schrumpfmindernde Polymerisate, wie z. B. Polystyrol, Polymethylmethacrylat Polyvinylacetat, Polyethylen, Polybutadien, Polyisopren, Celluloseester, Polyvinylchlorid und entsprechende Copolymere und Pfropfcopolymere, wie z. B. schlagzähes Polystyrol in Frage. Sie werden vorzugsweise als 30 bis 40 gew.-%ige Lösungen in Monomeren B eineingesetzt. Es eignen sich auch Kondensationspolymere, wie gesättigte Polyester oder Polyesterurethane, die in der Komponente A löslich sind und bei der Warmhärtung eine disperse Phase bilden. Die schrumpfmindernden Zusätze werden in Mengen von 0 bis 30 Gew.- %, vorzugsweise 3 bis 20 Gew.- %, bezogen auf A + B, eingesetzt. Als elastifizierende Zusätze, die zusätzlich auch schrumpfmindernd wirken, eignen sich kautschukartige Blockcopolymere, insbesondere solche aus 40 bis 95 Gew.- % eines Diolefins, z. B. Butadien, Isopren oder Chloropren, und 60 bis 5 Gew.- % eines Vinylaromaten, z. B. Styrol oder p-Methylstyrol.

Weitere Zusatzstoffe sind z. B. Inhibitoren, wie Hydrochinon, 2,6-Dimethylhydrochinon, tert.-Butylbrenzkatechin, p-Benzochinon, Chloranil, 2,6-Dimethylchinon, Nitrobenzole, wie m-Dinitrobenzol, Thiodiphenylamin oder Salze von N-Nitroso-N-cyclohexylhydroxylamin sowie deren Gemische. Die Inhibitoren sind in den Formmassen im allgemeinen in einer Menge von 0,005 bis 0,2, vorzugsweise 0,01 bis 0,1 Gew.- %, bezogen auf die Komponenten A + B, enthalten.

Geeignete Härtungsbeschleuniger sind z. B. Oktoate oder Naphthenate von Kupfer, Blei, Calcium, Magnesium, Cer und insbesondere von Mangan und Cobalt ; ferner aromatische Amine, wie Dimethylanilin oder Diethylanilin.

Ein bevorzugtes Verfahren zur Herstellung der erfindungsgemäßen Formmassen besteht darin, daß man zunächst eine Lösung aus dem ungesättigten Polyester A in den Monomeren B herstellt, die außerdem das Peroxid D, das Eindickmittel E, das Trennmittel F und gegebenenfalls die weiteren Zusatzstoffe G enthält, und mit diesem flüssigen Gemisch die Verstärkungsfasern C tränkt. Das Eindicken des Harzgemisches geschieht durch polymeranaloge Umsetzungen des Eindickmittels mit den Endgruppen des ungesättigten Polyesters, wobei der Viskositätsanstieg durch Molekulargewichtsvergrößerung verursacht wird. Das Eindicken kann bei Raumtemperatur erfolgen, es dauert dann im allgemeinen einige Stunden. Durch Erhöhen der Temperatur kann es beschleunigt werden. Bevorzugt wird dann bei Temperaturen zwischen 50 und 80 °C 2 bis 10 min lang eingedickt. Bei dem Eindickprozeß entstehen klebfreie und lagerfähige Halbzeuge von genügend hoher Viskosität, die je nach Art und Menge der Eindickmittel, Füllstoffe bzw. Verstärkungsmaterialien lederartige oder steife Konsistenz haben. Es entstehen flächige Halbzeuge, sogenannte SMC-Formmassen. Wenn man keine mattenförmige Verstärkungsmaterialien C sondern kürzere, z. B. 1 bis 5 cm lange Fasern verwendet, erhält man teigartige BMC-Formmassen. Die Formmassen können in Stahlformen unter einem Druck von 0,4 bis 15 N.mm$^{-2}$ bei Temperaturen von 80 bis 180 °C, vorzugsweise zwischen 120 und 160 °C zu Formteilen verarbeitet werden. So lassen sich z. B. auf dem Kraftfahrzeugsektor Karosserieteile, wie Motorhauben, Heckklappen und Schiebedächer oder Stoßfänger herstellen, auf dem Elektrosektor Kabelverteilerkästen, oder auf dem Möbelsektor Stühle, Heizgehäuse oder Schalen. Derartige Produkte zeichnen sich gegenüber Metallen durch leichteres Gewicht, hohe Festigkeit in Bezug auf das Gewicht, gute Korrosionsbeständigkeit und eine Flexibilität in der Gestaltung der Teile aus.

Die in den Beispielen genannten Teile und Prozente beziehen sich auf das Gewicht.

Herstellung der Polyesterharzlösungen

A1 : Ein ungesättigter Polyester mit Säurezahl 22 wurde hergestellt durch Umsetzung von Maleinsäure, Phthalsäure und Propandiol-1,2 im Molverhältnis 1 :0,25 :1,25. Er wurde 67 %ig in Styrol gelöst und mit 100 ppm Hydrochinon stabilisiert.

A2 : Ein ungesättigter Polyester mit Säurezahl 25 wurde hergestellt durch Umsetzung von Maleinsäureanhydrid und Propandiol-1,2 im Molverhältnis 1 : 1. Er wurde 67 %ig in Styrol gelöst und mit 200 ppm Hydrochinon stabilisiert.

A3 : Ein Vinylesterharz wurde hergestellt durch Umsetzung eines Phenol/Formaldehyd-Kondensats mit Epichlorhydrin und anschließender Veresterung mit Methacrylsäure.

Beispiel 1a (Vergleich)

Mit einem schnellaufenden Rührwerk (ca. 1 000 U/min) wurde folgende Mischung hergestellt :

100 Teile Harz A1
150 Teile Füllstoff Kreide (MILLICARB der Fa. Omya)
1,5 Teile tert. Butylperbenzoat (50 %ig)
1,5 Teile Magnesiumoxid
100 Teile Glasfasern einer Länge von 25 mm

Die Mischung wurde 3 min lang bei 150 °C und einem Druck von 80 bar in einer Stahlform 40×50 cm verpreßt. Das entstandene Formteil konnte nicht entformt werden, da die Haftung an Stahl so groß war, daß die Form zusammenklebte.

Beispiel 1b (erfindungsgemäß)

Es wurde wie in Beispiel 1a gearbeitet, jedoch wurden 2 Teile eines Salzes aus 1 Mol N,N-Dimethyl-1,3-propandiamin und 2 Mol Ölsäure zugesetzt. Hier konnten problemlos 30 Formteile hintereinander gepreßt werden, ohne daß Oberflächenstörungen durch Haftung an der Form auftraten.

Beispiel 2

Folgende Mischung wurde hergestellt :

60 Teile Harz A2
40 Teile einer 33 %igen Lösung von Polyvinylacetat in Styrol
150 Teile Kreide
1,5 Teile tert.-Butylperbenzoat (50 %ig)
3 Teile Magnesiumhydroxid
5 Teile Styrol
2 Teile Salz aus N,N-Dimethyl-1,3-propandiamin und Ölsäure
100 Teile Glasfasern einer Länge von 25 mm

Die Mischung wurde, wie in Beispiel 1 beschrieben, verpreßt. Das entstandene Formteil konnte problemlos entformt werden.

Beispiel 3

Eine Mischung wurde hergestellt aus :

100 Teilen Harz A3
15 Teilen Butadien/Styrol-Blockcopolymer-Kautschuk
150 Teilen Kreide
100 Teilen Glasfasern (Länge 25 mm)
1,5 Teilen tert.Butylperbenzoat
1,5 Teilen Magnesiumoxid
3,5 Teilen des Trennmittels nach Beispiel 1b
4,5 Teilen Zinkstearat

Die Mischung wurde wie in Beispiel 1a beschrieben verpreßt. Das entstandene Formteil konnte problemlos entformt werden. Ohne das erfindungsgemäße Trennmittel ist dies nicht möglich, selbst wenn die Zinkstearatmenge auf 10 Teile erhöht wird.

**Patentanspruch**

Härtbare ungesättigte Polyesterformmassen, enthaltend ein Gemisch aus

A. einem ethylenisch ungesättigten Polyester oder einem endständig ungesättigten Vinylesterharz, gegebenenfalls

B. bis zu 80 Gew.- %, bezogen auf A + B, eines ethylenisch ungesättigten, mit A copolymerisierbaren Monomeren,

C. 5 bis 400 Gew.- %, bezogen auf A + B, faserförmiger Verstärkungsmittel und/oder anorganischer Füllstoffe,

D. 0,1 bis 3 Gew.- %, bezogen auf A + B, organischen Peroxiden,

E. 0,2 bis 5 Gew.- %, bezogen auf A + B, eines Eindickmittels,

F. 0,1 bis 5 Gew.- %, bezogen auf A + B, eines Trennmittels, sowie gegebenenfalls

G. üblichen schrumpfmindernden oder elastifizierenden organischen Polymeren, Inhibitoren, Pigmente und Härtungsbeschleuniger,

dadurch gekennzeichnet, daß als Trennmittel Ammoniumsalze von aliphatischen Carbonsäuren mit aliphatischen primären Aminen oder Amid- oder Estergruppen enthaltenden primären, sekundären oder tertiären Aminen verwendet werden, wobei die Salze mindestens 25 aliphatische Kohlenstoffatome aufweisen.

**Claim**

A curable unsaturated polyester molding composition containing a mixture of

A. an ethylenically unsaturated polyester or a terminally unsaturated vinyl ester resin,

B. optionally up to 80 % by weight, based on A + B, of an ethylenically unsaturated monomer which is copolymerizable with A,

C. from 5 to 400 % by weight, based on A + B, of a fibrous reinforcing agent and/or an inorganic filler,

D. from 0.1 to 3 % by weight, based on A + B, of an organic peroxide,

E. from 0.2 to 5 % by weight, based on A + B, of a thickener,

F. from 0.1 to 5 % by weight, based on A + B, of a mold release agent and optionally

G. a customary shrinkage-reducing or elasticizing organic polymer, an inhibitor, a pigment and a curing accelerant,

wherein the mold release agent is an ammonium salt of an aliphatic carboxylic acid with an aliphatic primary amine or with a primary, secondary or tertiary amine containing amide or ester groups, the salt having at least 25 aliphatic carbon atoms.

**Revendication**

Masses de moulage durcissables, à base de polyester insaturé, contenant un mélange de

A. un polyester insaturé éthyléniquement ou une résine ester vinylique non saturé en fin de chaîne,

B. éventuellement, jusqu'à 80 % en poids, rapporté à A + B, d'un monomère, copolymérisable avec A, insaturé éthyléniquement,

C. 5 à 400 % en poids rapporté à A + B, d'agents de renforcement fibreux et/ou de charges inorganiques,

D. 0,1 à 3 % en poids rapporté à A + B, de péroxydes organiques,

E. 0,2 à 5 % en poids rapporté à A + B, d'un épaississant,

F. 0,1 à 5 % en poids rapporté à A + B d'un agent de démoulage et éventuellement

G. des polymères organiques réduisant le retrait, ou élastifiants, usuels, inhibiteurs, pigments et accélérateurs de durcissement

caractérisées par le fait que l'on utilise, comme agents de démoulage, des sels d'ammonium d'acides carboxyliques aliphatiques et d'amines primaires aliphatiques ou d'amines primaires, secondaires ou tertiaires contenant des groupes amide ou ester, les sels comportant au moins 25 atomes de carbone aliphatiques.